# DEMANDE DE BREVET EUROPEEN

(11) **EP 0 896 849 A1**
(43) Date de publication de la demande: **17.02.1999**
(21) Numéro de dépôt: 98402031.3
(22) Date de dépôt: 11.08.1998
(51) Int. Cl.: B23K 1/018

(54) **Procédé et dispositif d'enlèvement de composants montés sur un substrat**

(30) Priorité: 14.08.1997 FR 9710389
(71) Demandeur: Matra Bae Dynamics France, 75116 Paris (FR)
(72) Inventeur: Lecaplain, Jacques, 78140 Velizy Villacoublay (FR)
(74) Mandataire: Fort, Jacques

(57) **Abrégé**

Le dispositif permet d'enlever un composant monté sur un substrat par un réseau de billes de soudure. Il comprend un support (10) ayant un fond (14) et des ailes (16) d'appui sur un substrat; un équipage mobile (12) pouvant coulisser dans le fond du support et ayant des rebords terminaux internes minces destinés à s'insérer entre le substrat et un composant à enlever; et des moyens élastiques (34) tendant à soulever l'équipage vers le fond.

## Description

La présente invention concerne l'enlèvement de composants comportant un boîtier, fixés sur un substrat par soudures, notamment par un réseau de billes de soudure, suivant une technologie fréquemment dénommée BGA.

Ce type de montage est de plus en plus utilisé. Comparé au montage des boîtiers par des connexions périphériques, il autorise un nombre d'entrées-sorties beaucoup plus grand, facilite les reports sur substrat, écarte les risques provoqués par la déformation des connexions de sortie au cours d'une manipulation et réduit la longueur des connexions.

Il est souvent nécessaire de remplacer un tel composant qui se révèle défectueux.

La solution fréquemment utilisée à l'heure actuelle pour enlever un tel composant consiste à diriger un flux d'air chaud sur la périphérie du boîtier pour fondre les billes périphériques et à chauffer la face intérieure du substrat, généralement constitué par une carte de circuit imprimée, pour aider à la fusion des billes placées au centre du boîtier. Ce procédé peut dégrader le circuit imprimé dans le cas d'une surchauffe excessive, notamment lorsqu'il faut enlever un gros boîtier.

De plus, cette solution est très difficile à mettre en oeuvre dans le cas des substrats double face, qui portent des composants des deux côtés.

Un problème similaire se pose pour les composants montés à plat de grande taille, à connexions périphériques.

La présente invention vise à fournir un procédé et un dispositif d'enlèvement de composants, en vue de leur remplacement, réduisant de façon très considérable le risque d'endommagement du composant ou du substrat, utilisable aussi bien dans le cas de substrat double face que de substrat simple face.

Dans ce but, l'invention propose notamment un dispositif comprenant un support ayant un fond et des ailes d'appui sur un substrat portant un composant à enlever; un équipage coulissant à travers le fond ayant des rebords terminaux internes minces destinés à s'insérer entre le substrat et un composant à enlever; et des moyens élastiques tendant à soulever l'équipage vers le fond.

Un tel outillage permet de mettre en oeuvre un procédé d'enlèvement de composants fixés sur un substrat, tel qu'une carte, par un réseau de billes de soudure, suivant lequel: on place un outillage sur le substrat en glissant les rebords sous les bords du composant à enlever et en comprimant le ressort; on soumet l'ensemble à une opération de refusion (notamment en phase vapeur ou four à passage) à une température suffisante pour fondre la soudure, jusqu'à ce que l'équipage soit soulevé par l'action des moyens élastiques; et on retire le composant.

Il suffit d'un ressort de force faible pour séparer du substrat un composant qui n'est plus retenu que par la tension superficielle de la soudure fondue. Il a été constaté que les autres composants portés par le substrat et soumis, en même temps que le composant à enlever, à une refusion, ne subissent aucun dommage. Dans la pratique, il n'y a pas d'altération des liaisons soudées, même si on va jusqu'à cinq refusions et solidifications successives.

Si l'on souhaite utiliser le même outillage pour enlever des composants ayant des dimensions variables, le dispositif comportera des moyens de réglage de l'écartement entre les rebords. Dans une réalisation qui s'est montrée satisfaisante, l'équipage comporte une plaque portant les deux pattes munies de rebords, souvent par l'intermédiaire de moyens d'ajustage, et une tige fixée à la plaque et traversant le fond. Le ressort peut être dans ce cas interposé entre le fond du support et une collerette terminale de la plaque, d'une seule pièce ou rapportée.

Plusieurs tiges peuvent être prévues au lieu d'une seule. Les moyens élastiques peuvent de leur côté présenter plusieurs formes et par exemple comporter un ressort à pincette plutôt qu'un ressort bobiné.

Pour remplacer le composant enlevé, on nettoie les plages de réception de billes, par exemple à l'aide d'une tresse à dessouder ou à l'aide d'une buse chauffante avec aspiration de la soudure fondue, on dépose de la pâte à souder à l'aide d'un microdoseur ou par sérigraphie, on remplace le composant et on soumet l'ensemble à une refuSion en phase vapeur.

Les caractéristiques ci-dessus ainsi que d'autres apparaîtront mieux à la lecture de la description qui suit d'un mode particulier de réalisation, donné à titre d'exemple non-limitatif. La description se réfère aux dessins qui l'accompagnent, dans lesquels :
la figure 1 est une vue en élévation et en coupe partielle montrant un mode possible de réalisation du dispositif;
la figure 2 est une vue du dessous de l'équipage mobile de la figure 1 ;
la figure 3 est une vue schématique montrant la mise en place de l'outillage sur un composant à enlever;
la figure 4, similaire à la figure 3, montre le composant dans l'état où il se trouve après passage en phase vapeur.

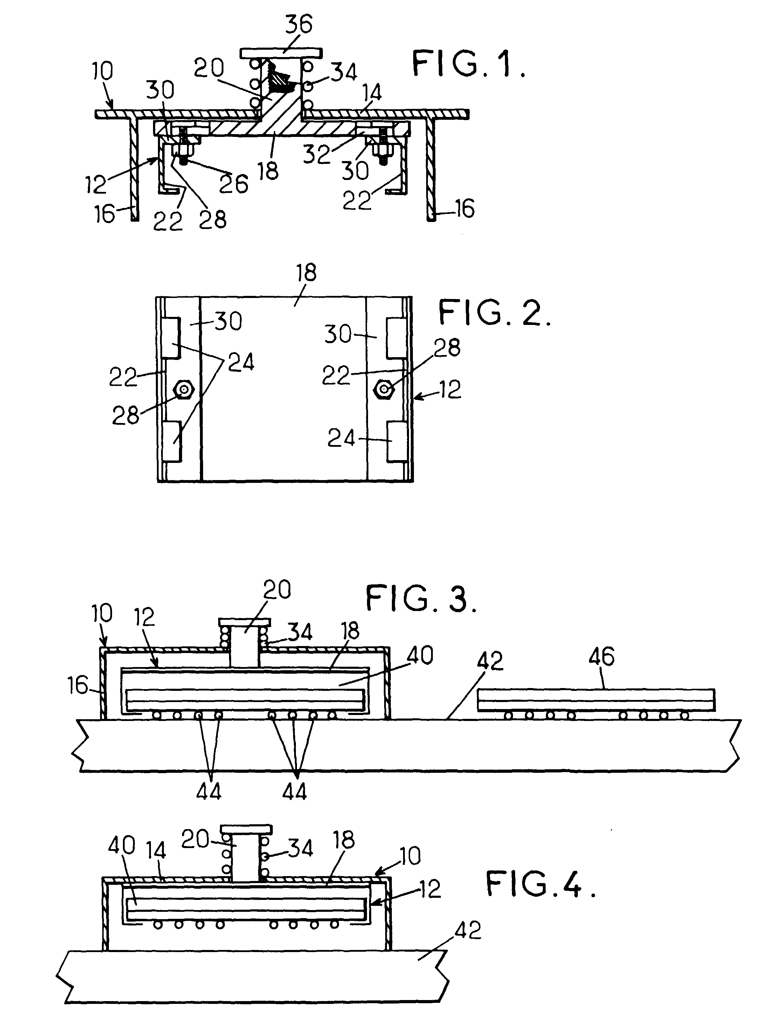

Le dispositif montré en figure 1 est notamment utilisable pour enlever un composant monté en surface ayant des connexions dites surfaciques, plutôt que périphériques, constituées par des billes de soudure, généralement en alliage étain-plomb.

Le processus d'assemblage d'une carte portant, sur ses deux faces, des composants connectés de cette façon est alors le suivant: les emplacements de connexion reçoivent un dépôt de pâte à souder; les composants destinés à la première face sont mis en place sur la carte, maintenue horizontale; l'ensemble est passé dans un four ou étuve de refusion en phase vapeur; la carte est sortie du four, retournée et équipée sur cette seconde face; elle est soumise à un nouveau passage en phase vapeur de refusion sur les deux faces. Les composants du dessous sont maintenus, pendant cette opération, par les tensions superficielles.

Le dispositif montré en figure 1 peut être regardé comme comprenant un support 10 et un équipage mobile 12. Le support 10 présente un fond 14 percé d'un trou central et deux ailes 16, orthogonales au fond. Les arêtes terminales des deux ailes 16 sont destinées à s'appliquer sur le substrat auquel est fixé le composant à enlever. L'équipage 12 représenté comporte une plaque 18 prolongée par une tige 20 dont le diamètre est tel qu'elle puisse glisser dans le trou du fond 14 et deux pattes 22. Ces pattes se terminent par deux rebords 24, dirigés l'un vers l'autre, suffisamment minces pour pouvoir s'insérer entre un composant et le substrat qui le porte. Lorsque l'outillage est destiné à être utilisé sur des composants de largeur variable, l'écartement entre les pattes est ajustable. Dans le cas illustré sur la figure 1 et 2, les pattes sont fixées à la plaque 18 par des liaisons à vis 26 et écrou 28. Les vis traversent des trous de diamètre correspondant percés dans une bride supérieure 30 de chaque patte. La tête de la vis s'appuie contre des épaulements d'une lumière allongée 32 de la plaque 18.

Des moyens élastiques, constitués par un ressort 34 interposé entre le fond 14 et une collerette terminale 36 de la tige 20, tend à amener l'équipage dans la position où il est représenté en figure 1 et où les rebords sont au-dessus du niveau des arêtes terminales des ailes 16. La distance entre la plaque 14 et la collerette 36 est suffisante pour qu'on puisse amener les rebords au niveau des aretes terminales en appuyant sur la tige 36.

Le procédé d'enlèvement d'un composant peut alors être le suivant; lorsqu'on l'applique à un composant 40 fixé à une carte 42 par un réseau de billes 44. En appuyant sur la tige 11, on amène les rebords au niveau des arêtes terminales des ailes 16 et on glisse les rebords terminaux sous les bords du composant 40. L'ensemble, placé horizontalement, est porté dans un four de refusion en phase vapeur, portant l'ensemble à une température suffisante pour faire fondre les billes de soudure, par exemple à 210°C dans le cas de billes de soudure étain-plomb. Les billes qui fixent tous les composants fondent alors. Mais ceux des composants, tels que le composant 46, montré en figure 3, qui doivent rester en place sont maintenus par la tension superficielle de la soudure fondue. Au contraire, le composant sur lequel a été placé l'appareillage est soulevé par le ressort 34 et amené dans la position montrée en figure 4. Le ressort 34 se déploie et amène la plaque 18 en butée contre le fond 14. Une fois l'ensemble refroidi pour que les composants qui doivent rester en place soit de nouveau raccordés au substrat, l'ensemble est sorti du four. Le composant 40 peut être dégagé sans difficulté de l'outillage et remplacé par un processus classique.

Le dispositif représenté ne représente qu'un exemple de réalisation auquel de nombreuses modifications peuvent être apportées. Par exemple, plusieurs tiges 20 peuvent être prévues. L'équipage mobile peut être simplifié si on admet d'utiliser plusieurs outillages différents, suivant les dimensions du composant à enlever.

## Revendications

1. Dispositif d'enlèvement d'un composant fixé sur un substrat par un réseau de soudures, comprenant un support (10) ayant un fond (14) et des ailes (16) d'appui sur un substrat; un équipage mobile (12) pouvant coulisser dans le fond du support et ayant des rebords terminaux internes minces destinés à s'insérer entre le substrat et un composant à enlever; et des moyens élastiques (34) tendant à soulever l'équipage vers le fond.

2. Dispositif selon la revendication 1, caractérisé en ce que l'équipage mobile comprend des moyens de réglage de l'écartement des rebords.

3. Dispositif selon la revendication 1 ou 2, caractérisé en ce que l'équipage mobile comprend une plaque (18) parallèle au fond (14) et deux pattes (22) parallèles, munies des rebords et d'écartement ajustable sur la plaque, et au moins une tige (20) fixée à la plaque, coulissant dans le fond.

4. Dispositif selon la revendication 3, caractérisé en ce que les moyens élastiques sont constitués par au moins un ressort (34) interposé entre le fond (14) et une collerette terminale (36) de la tige (20).

5. Procédé d'enlèvement d'un composant (40) fixé sur un substrat (42) tel qu'une carte de circuit imprimé par des soudures, suivant lequel:
on place un dispositif selon l'une quelconque des revendications 1 à 4 sur le substrat (42) en glissant les rebords de l'équipage sous les bords du composant (40), en comprimant les moyens élastiques (34);
on soumet l'ensemble à une opération de refusion en maintenant le substrat horizontal avec le composant sur le dessus, jusqu'à une température suffisante pour fondre la soudure, jusqu'à ce que l'équipage (12) ait soulevé le composant (40); et
on retire le composant.

6. Procédé selon la revendication 5, caractérisé en ce que la refusion est effectuée en phase vapeur ou au four à passage.

7. Procédé de remplacement d'un composant, selon lequel, après avoir enlevé le composant par le procédé suivant la revendication 5 ou 6,
on nettoie les emplacements des billes de soudure;
on dépose de la pâte à souder à l'aide d'un microdoseur ou par sérigraphie;
on remplace le composant et on soumet l'ensemble à une refusion en phase vapeur.

8. Procédé suivant la revendication 7 de remplacement d'un composant fixé par un réseau de billes (44) de soudure.
